# EUROPEAN PATENT APPLICATION

(11) **EP 4 790 730 A1**
(43) Date of publication of application: **12.08.2026**
(21) Application number: 25874985.2
(22) Date of filing: 11.09.2025
(51) Int. Cl.: H01B 13/00, C01G 33/00, C01G 35/00, H01B 1/06, H01M 10/052, H01M 10/0562

(54) **METHOD FOR MANUFACTURING SOLID ELECTROLYTE AND METHOD FOR MANUFACTURING SECONDARY BATTERY**

(30) Priority: 04.10.2024 JP 2024174937
(71) Applicant: DENSO CORPORATION, Kariya-city, Aichi 448-8661 (JP)
(72) Inventor: ONOUE Shuhei, Kariya- city, Aichi 4488661 (JP); AZUMA Haruka, Kariya- city, Aichi 4488661 (JP); ONODERA Hitoshi, Kariya- city, Aichi 4488661 (JP); YOSHIDA Shuhei, Kariya- city, Aichi 4488661 (JP)
(74) Representative: TBK
(86) International application number: PCT/JP2025/032181
(87) International publication number: WO 2026/074895

(57) **Abstract**

A manufacturing method of a solid electrolyte of a pyrochlore-type that includes a plurality of cations including a metal cation, a halogen element, and a defect structure, includes a mixing process (S16) that includes preparing a mixed raw material by mixing a precursor of the solid electrolyte or raw materials for the precursor with a halogen-containing raw material containing the halogen element, and a firing process (S17) that includes firing the mixed raw material. The firing process includes volatilizing the halogen element from the solid electrolyte at a halogen volatilization rate Vout and supplying the halogen element to a firing atmosphere of the solid electrolyte at a halogen supply rate Vin. The firing process includes firing the mixed raw material under an atmosphere in which a relationship of Vin/(Vout × Dp) ≥ 0.015 is satisfied, where Dp is a median particle diameter of the solid electrolyte.

## Description

### CROSS REFERENCE TO RELATED APPLICATION

This application is based on Japanese Patent Application No. 2024-174937 filed on October 4, 2024, the contents of which are hereby incorporated by reference.

### TECHNICAL FIELD

The present disclosure relates to a manufacturing method of a solid electrolyte having a pyrochlore structure and a manufacturing method of a secondary battery.

### BACKGROUND ART

Patent Literature 1 proposes a pyrochlore-type solid electrolyte for secondary batteries, having a composition formula Aa_{2-α}Ab_{(1+α)/3}B₂O_{7-β}X_{γ} (where Aa represents an alkali metal, Ab represents a lanthanoid, B represents a cationic metal, and X represents an anion that can substitute for O). The pyrochlore-type solid electrolyte described in Patent Literature 1 has defects in its crystal structure, with a portion of the oxygen atoms constituting the pyrochlore structure being substituted with halogen elements, thereby achieving high ionic conductivity. The pyrochlore-type solid electrolyte has a crystal structure in which a three-dimensional network of BO₆ octahedra is formed, and a tunnel structure is formed in which cations composed of Aa/Ab and anions composed of X are arranged.

### PRIOR ART LITERATURE

### PATENT LITERATURE

Patent Literature 1: JP 7334813 B1

### SUMMARY OF INVENTION

However, when halogen elements are included in the pyrochlore structure, the halogen elements exist as weakly bonded species with Aa/Ab within the tunnel structure and are present in an unstable state due to the defect structure. Thus, the halogen elements are prone to dissociation from the crystal structure. Therefore, when manufacturing a pyrochlore-type solid electrolyte, there is a possibility that halogen elements may dissociate from the pyrochlore-type solid electrolyte during a firing process, resulting in a decrease in ionic conductivity of the pyrochlore-type solid electrolyte.

In view of the above, it is an object of the present disclosure to restrict dissociation of a halogen element from a pyrochlore-type solid electrolyte when manufacturing the pyrochlore-type solid electrolyte containing the halogen element.

To achieve the above object, one aspect of the present disclosure provides a manufacturing method of a solid electrolyte having a pyrochlore-type crystal structure that includes a plurality of cations including a metal cation, a halogen element, and a defect structure. The manufacturing method includes a mixing process that includes preparing a mixed raw material by mixing a precursor of the solid electrolyte or raw materials for the precursor with a halogen-containing raw material containing the halogen element, and a firing process that includes firing the mixed raw material. The firing process includes volatilizing the halogen element from the solid electrolyte at a halogen volatilization rate Vout and supplying the halogen element to a firing atmosphere of the solid electrolyte at a halogen supply rate Vin. The firing process includes firing the mixed raw material under an atmosphere in which a relationship of Vin/(Vout × Dp) ≥ 0.015 is satisfied, where Dp is a median particle diameter of the solid electrolyte.

Accordingly, the dissociation of halogen from the solid electrolyte during the firing process can be restricted, a predetermined amount of halogen can be maintained within the crystal structure, and a decrease in ionic conductivity can be restricted.

### BRIEF DESCRIPTION OF DRAWINGS

FIG. 1 is a cross-sectional view showing a configuration of a secondary battery according to an embodiment of the present disclosure.
FIG. 2 is a diagram showing a crystal structure of a pyrochlore-type solid electrolyte.
FIG. 3 is a diagram showing a firing furnace for firing the pyrochlore-type solid electrolyte.
FIG. 4 is a diagram showing a firing furnace for firing the pyrochlore-type solid electrolyte.
FIG. 5 is a diagram showing a halogen supply rate Vin, a halogen volatilization rate Vout, and a particle diameter Dp of the pyrochlore-type solid electrolyte.
FIG. 6 is a diagram showing a manufacturing process of the pyrochlore-type solid electrolyte.
FIG. 7 is a diagram showing halogen retention rates and ionic conductivities of Examples of the present disclosure and Comparative Examples.
FIG. 8 is a diagram showing halogen retention rates and ionic conductivities of Examples of the present disclosure and Comparative Examples.

### DESCRIPTION OF EMBODIMENTS

Hereinafter, embodiments in which an ion conductor of the present disclosure is applied to a solid electrolyte for secondary batteries will be described with reference to the drawings. A secondary battery 10 of the present embodiment is a lithium ion battery in which charging and discharging are performed by lithium ions moving between a negative electrode 12 and a positive electrode 14.

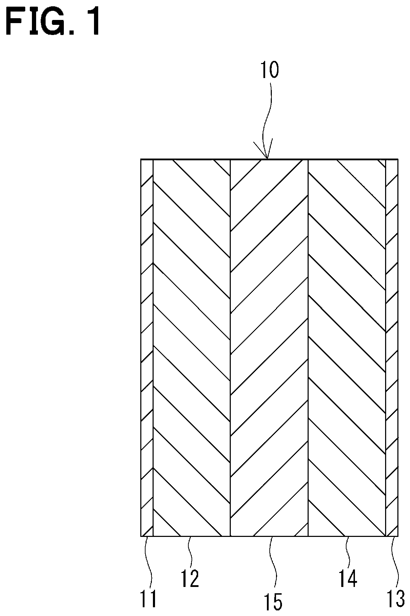

As shown in FIG. 1, the secondary battery 10 includes a negative electrode current collector 11, the negative electrode 12, a positive electrode current collector 13, the positive electrode 14, and a solid electrolyte 15. These components of the secondary battery 10 are laminated in layers.

The solid electrolyte 15 is sandwiched between the positive electrode 14 and the negative electrode 12. The negative electrode 12 and the solid electrolyte 15 are in contact with each other. The positive electrode 14 and the solid electrolyte 15 are in contact with each other. The negative electrode 12 and the positive electrode 14 are connected through the solid electrolyte 15. The secondary battery 10 of the present embodiment is a lithium ion battery in which charging and discharging are performed by lithium ions moving between the negative electrode 12 and the positive electrode 14 through the solid electrolyte 15.

A stacked body including the negative electrode 12, the positive electrode 14, and the solid electrolyte 15 is disposed between the negative electrode current collector 11 and the positive electrode current collector 13. The negative electrode current collector 11 and the negative electrode 12 are in contact with each other. The positive electrode current collector 13 and the positive electrode 14 are in contact with each other. The negative electrode current collector 11 and the positive electrode current collector 13 are connected through the stacked body.

Any material that can be used as a current collector for a lithium ion battery can be used for the negative electrode current collector 11 and the positive electrode current collector 13. In the present embodiment, Cu is used as the negative electrode current collector 11, and Al is used as the positive electrode current collector 13.

A negative electrode material constituting the negative electrode 12 can be any material that can be used as a negative electrode active material for lithium ion batteries, such as a carbon-based negative electrode material, an oxide-based negative electrode material, or a metal-based negative electrode material. In the present embodiment, graphite is used as a negative electrode material. The negative electrode 12 may contain a conductive agent, a binder, and a polymer. The negative electrode 12 may further include a solid electrolyte.

A positive electrode material constituting the positive electrode 14 can be any material that can be used as a positive electrode active material for lithium ion batteries. As the positive electrode 14, for example, layered rock salt-type active materials, olivine-type active materials, or spinel-type active materials can be used. Examples of the layered rock-salt type active materials include ternary positive electrode materials such as LiNiₓCo_{y}Mn_{z}O₂ (NCM) and LiNiₓCo_{y}Al_{z}O₂ (NCA). Examples of the olivine type active materials include LiFePO₄ (LFP), LiMn₁₋ₓFeₓPO₄ (LMFP), LiMnPO₄ (LMP), LiCoPO₄ (LCP), and LiNiPO₄ (LNP). Examples of the spinel type active materials include LiMn₂O₄ (LMO) and LiNi_{0.5}Mn_{1.5}O₄ (LNMO).

The solid electrolyte 15 can transfer lithium ions between the negative electrode 12 and the positive electrode 14. In other words, the solid electrolyte 15 is an ion conductor having a structure that allows cations to be conducted. In the present embodiment, as the ion conductor constituting the solid electrolyte 15, a pyrochlore-type oxide solid electrolyte having a pyrochlore-type crystal structure is used. Hereinafter, the pyrochlore-type oxide solid electrolyte will also be referred to as a pyrochlore-type solid electrolyte.

The pyrochlore-type solid electrolyte used as the ion conductor has a pyrochlore structure represented by a composition formula "Aa_{2-α}Ab_{(1+α)/3}B₂O_{7-β}X_{γ}". In the above composition formula, O is an oxygen atom, and Aa, Ab, B, and X represent any element or group. Aa, Ab, and B are different types of cations, while O and X are different types of anions. In the present embodiment, a halogen is used as X. The pyrochlore-type solid electrolyte contains a plurality of cations, a plurality of anions, and vacancies within its crystal structure. The plurality of cations includes conductive ions that are capable of migrating through the crystal, as well as non-conductive ions that do not migrate through the crystal.

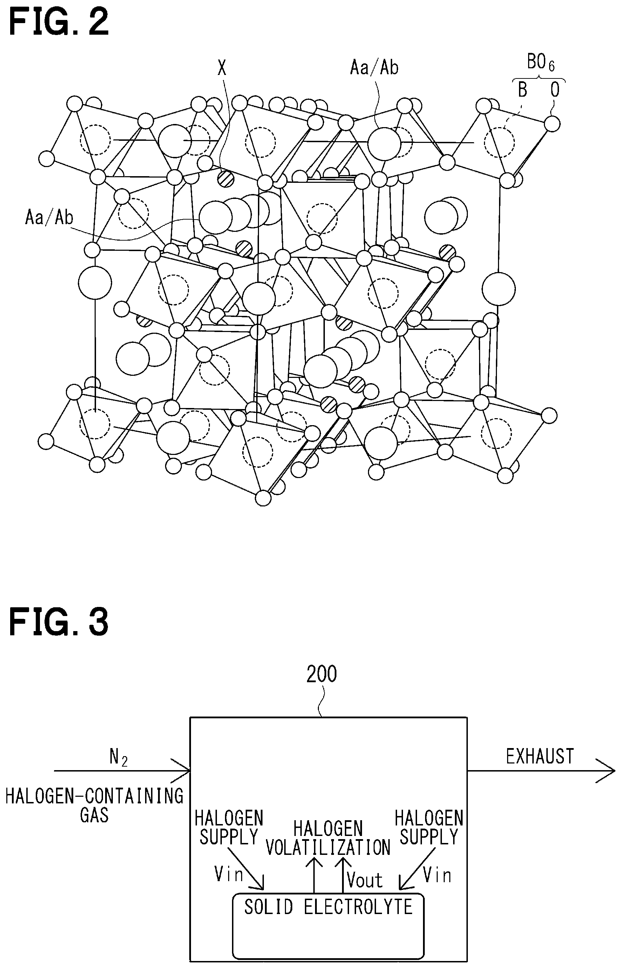

As shown in FIG. 2, the pyrochlore-type solid electrolyte has a crystal structure in which a three-dimensional network of BO₆ octahedra is formed. BO₆ consists of a cation B at the center with O positioned at the vertices, and it shares vertices with adjacent BO₆. In the three-dimensional network composed of BO₆, a hexagonal tunnel structure is formed, in which cations Aa/Ab and halogen X are arranged.

In the above composition formula, 0.6 < α < 2.0, 0 < β ≤ 1, and 0 < γ ≤ 1. When α changes, the composition ratio of Aa and Ab changes, and when β changes, the composition ratio of O and X changes.

As the cation Aa, an alkali metal cation can be used. As the alkali metal represented by Aa, any one of Li, Na, and K can be used. In the present embodiment, Li is used as Aa. The composition ratio (2-α) of Aa is in the range of 0 < (2-α) < 1.4.

The cation Ab includes at least a lanthanoid. As the lanthanoid represented by Ab, at least one of La, Ce, Nd, or Sm can be used. In the present embodiment, La is used as Ab. The composition ratio (1+α)/3 of Ab is in the range of 0.53 < (1+α)/3 < 1.

The basic structure of the cation Ab consists of a lanthanoid. However, a portion of the lanthanoid constituting Ab may be substituted with an alkaline earth metal (such as Ca, Mg, or Sr). In the pyrochlore-type solid electrolyte of the present embodiment, it is considered that defects are generated in the crystal structure by including a lanthanoid in the pyrochlore structure having the above composition formula, where 0.6 < α < 2.0, 0 < β ≤ 1, and 0 < γ ≤ 1, resulting in improved ionic conductivity. In the present embodiment, La is used as Ab.

In the pyrochlore-type solid electrolyte of the present embodiment, the cation A in the general composition formula "A₂B₂O₇" is a composite cation comprising lithium metal and a lanthanoid. This is considered to contribute to the improvement of the ionic conductivity of the pyrochlore-type solid electrolyte.

The cation B is a metal cation different from Aa and Ab, selected from transition metals or metals from groups 13 to 15. B forms an octahedron surrounded by six O atoms within the crystal. As the transition metal represented by B, a group 4 or group 5 transition metal can be used, and more specifically, at least one of Nb, Ta, Ti, Zr, Hf, or V can be used. As the group 13 element represented by B, Al, Ga, or In can be used. As the group 14 element, Ge or Sn can be used. As the group 15 element, Sb or Bi can be used. In the present embodiment, Nb or Ta is used as B.

The halogen X can be substituted for the O atoms constituting the pyrochlore structure. X has different electronegativity and polarizability compared to the O atom. As the halogen X, at least one of F, Cl, Br, and I can be used. The composition ratio γ of X falls in the range of 0 < γ ≤ 1, and at least a portion of the O atoms constituting the pyrochlore structure is substituted with X. In the present embodiment, F or Cl is used as X.

The pyrochlore-type solid electrolyte of the present embodiment has a defect structure in which lattice defects are included in the crystal by replacing a portion of the O atoms constituting the pyrochlore structure with anions having electronegativity and polarizability different from those of the O atoms. The pyrochlore-type solid electrolyte of the present embodiment is considered to have improved ionic conductivity because the pyrochlore structure includes the defect structure.

In the pyrochlore-type solid electrolyte of the present embodiment, Aa and Ab are partially deficient as a defect structure. The general formula for a pyrochlore structure is "A₂B₂O₇", and the compositional ratio of the cation A is 2. In contrast, in the pyrochlore-type solid electrolyte of the present embodiment, composition ratios of Aa and Ab are "2-α" and "(1+α)/3", respectively, and 0.6 < α < 2.0, so that the total composition ratio of Aa and Ab is less than 2. That is, in the crystal structure of the pyrochlore-type solid electrolyte of the present embodiment, at least a portion of either Aa or Ab is missing, forming vacancies. The compositional ratio corresponding to the deficient portions (vacancies) of Aa and Ab is (2α-1)/3.

In the A-site of the pyrochlore-type solid electrolyte of the present embodiment, at least one of cation Aa, cation Ab, and a vacancy is present. The A-site of the pyrochlore-type solid electrolyte is a cation conduction site, where cation Aa is a conducting ion that migrates through the crystal, and cation Ab is a non-conducting ion that does not migrate through the crystal.

In addition to the deviation of the composition ratio, the defect structure can also be formed by making the sum of valences of the cations including Aa, Ab and B and the anions including O and X negative in the above composition formula.

Furthermore, the pyrochlore-type solid electrolyte of the present embodiment is a composite anionic compound in which multiple anions, such as O and X, are included in the pyrochlore structure. Because the anion represented by X is present in the BO₆ coordinated octahedral structure, the alkali metal represented by Aa can be positioned at the center of the space between the BO₆ coordinated octahedra without being attracted to the BO₆ coordinated octahedra. Therefore, it is considered that the pyrochlore solid electrolyte of the present embodiment has high ion conduction when used by applying an electric field such as that in a battery.

In addition, since α, β, and γ in the above compositional formula affect lattice defects and ionic conductivity, it is desirable to use them within an appropriate range. When the values of α, β, and γ are large, the defect concentration in the crystal lattice increases. However, if these values exceed a certain value, the concentration of the alkali metal represented by Aa decreases, leading to a reduction in ionic conductivity. Thus, it is desirable to control α within the range of 0.6 < α < 2.0, β within the range of 0 < β ≤ 1, and γ within the range of 0 < γ ≤ 1.

Examples of pyrochlore-type solid electrolytes include Li_{1.25}La_{0.58}Nb₂O₆F, Li_{1.25}La_{0.58}Ta₂O₆F, and Li_{1.25}La_{0.58}Nb₂O₆Cl. Hereinafter, "Li_{1.25}La_{0.58}Nb₂O₆F" is also referred to as "LLNOF," "Li_{1.25}La_{0.58}Ta₂O₆F" is also referred to as "LLTOF," and "Li_{1.25}La_{0.58}Nb₂O₆Cl" is also referred to as "LLNOCl."

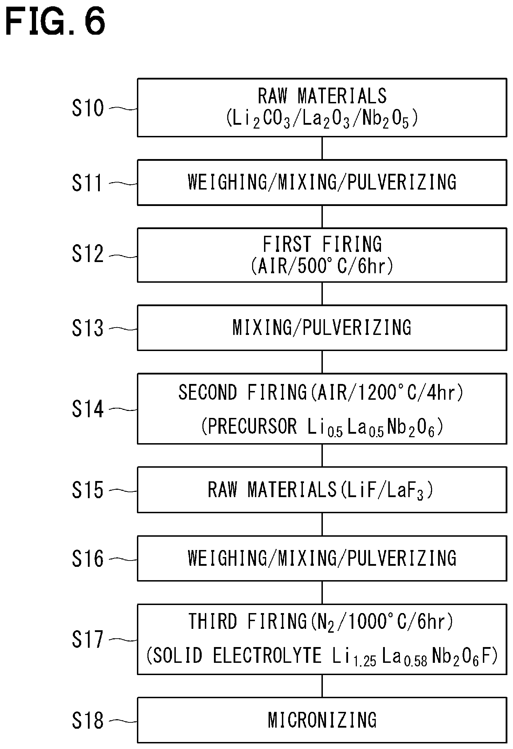

In pyrochlore-type solid electrolytes, the halogen X exists as a weakly bound species with cation Aa and cation Ab within the tunnel structure, and furthermore, since the structure includes defects and is in an unstable state, the halogen X readily dissociates from the crystal structure. For this reason, during the manufacturing process of the pyrochlore-type solid electrolyte, the halogen element tends to volatilize and dissociate in a firing process where the raw materials containing the halogen element are fired at a high temperature to produce the pyrochlore-type solid electrolyte. The firing process for firing the pyrochlore-type solid electrolyte is a third firing process S17 (see FIG. 6), which will be described later.

Therefore, in the present embodiment, the halogen element is supplied to the firing atmosphere during the firing process of the pyrochlore-type solid electrolyte. By supplying halogen to the firing atmosphere, it is possible to suppress the dissociation of halogen from the pyrochlore-type solid electrolyte and maintain a predetermined amount of halogen component within the pyrochlore-type solid electrolyte.

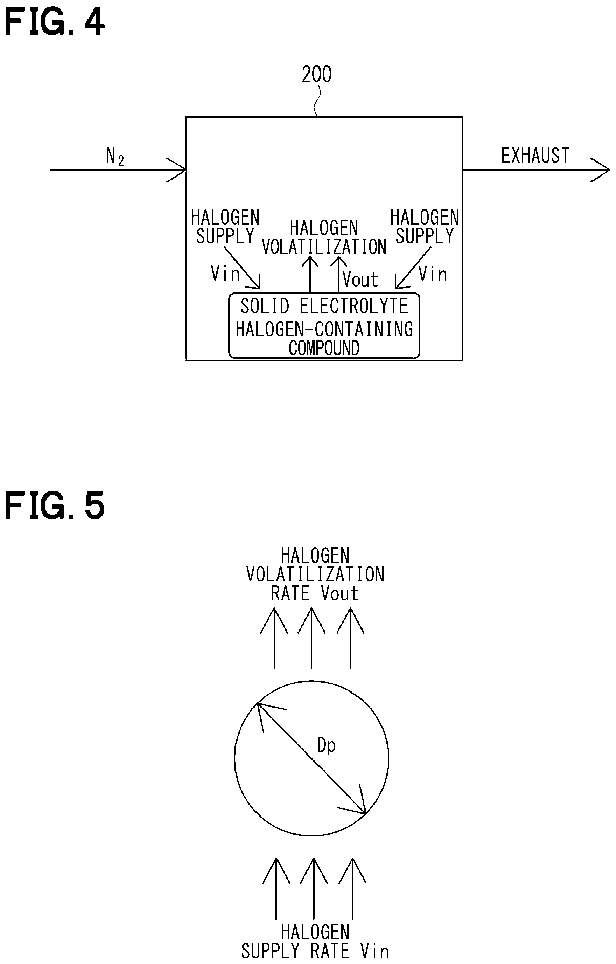

FIG. 3 and FIG. 4 illustrate a firing furnace 200 for firing the pyrochlore-type solid electrolyte. In the firing process, the raw materials are placed in the firing furnace 200 and heated under an atmosphere of air, nitrogen, or argon, thereby producing the pyrochlore-type solid electrolyte. In the present embodiment, nitrogen is used as the firing atmosphere.

As shown in FIG. 3, the supply of the halogen component to the firing atmosphere may be carried out by introducing a halogen-containing gas from outside into the interior of the firing furnace 200. The halogen-containing gas contains the same type of halogen as that contained in the pyrochlore-type solid electrolyte. The halogen-containing gas may be passed continuously or intermittently.

As the halogen-containing gas, when the halogen element contained in the pyrochlore-type solid electrolyte is fluorine, a fluorine-containing gas such as F₂, HF, BF₃, NF₃, PF₅, SiF₄, or SF₆ can be used. In addition, when the halogen element contained in the pyrochlore-type solid electrolyte is chlorine, a chlorine-containing gas such as Cl₂ or HCl can be used. Among these halogen-containing gases, from the standpoint of not damaging the firing furnace 200 and preventing the incorporation of elements other than the halogen component into the pyrochlore-type solid electrolyte, it is desirable to use F₂ or Cl₂. The halogen-containing gas may be supplied to the firing furnace 200 alone, or it may be supplied to the firing furnace 200 in a mixed state with an inert gas such as nitrogen or argon, or with air.

As shown in FIG. 4, the supply of the halogen component to the firing atmosphere may be carried out by adding a halogen-containing compound to the raw material of the pyrochlore-type solid electrolyte. The halogen-containing compound contains the same type of halogen as the halogen contained in the pyrochlore-type solid electrolyte.

The raw material in which the halogen-containing compound is added is a mixed raw material obtained by mixing a precursor of the pyrochlore-type solid electrolyte with a halogen-containing raw material that contains a halogen element. The halogen component is supplied to the firing atmosphere by volatilization of the halogen component from the halogen-containing compound added to the raw material of the pyrochlore-type solid electrolyte.

As the halogen-containing compound, it is possible to use a halide of at least one of the metal cations contained in the pyrochlore-type solid electrolyte. Examples of halides of the metal cations include metal cation fluorides (such as LiF and LaF₃) and metal cation chlorides (such as LiCl and LaCl₃).

When the halogen-containing compound is composed of a halide of at least one alkali metal cation contained in the pyrochlore-type solid electrolyte, it is sufficient to add the raw material serving as the halogen source in an amount exceeding the theoretical amount among the raw materials for the pyrochlore-type solid electrolyte. This allows halogen to be supplied to the firing atmosphere from the excess halogen source.

Here, a relationship among a halogen supply rate Vin of the pyrochlore-type solid electrolyte, a halogen volatilization rate Vout, and a particle diameter Dp will be explained with reference to FIG. 5. During the firing process, halogen elements are supplied to the firing atmosphere of the pyrochlore-type solid electrolyte at the halogen supply rate Vin, and halogen elements volatilize from the pyrochlore-type solid electrolyte at the halogen volatilization rate Vout.

The particle diameter Dp refers to the median particle diameter D50 of the pyrochlore-type solid electrolyte particles as measured by the laser diffraction and scattering method. The particle median diameter D50 refers to the particle diameter, on a volume basis, at which the integrated volume of particles, accumulated from the smaller particle diameters in the particle diameter distribution, reaches 50% of the total particle volume. In other words, the median particle diameter D50 represents the particle diameter corresponding to the median of the particle diameter distribution.

The halogen supply rate Vin is the amount of halogen supplied to the firing atmosphere per unit time, with units of ppm/min. More specifically, the halogen supply rate Vin is the ratio of the amount of halogen supplied per unit time to the theoretical halogen amount of the pyrochlore-type solid electrolyte.

For example, if the theoretical halogen amount of the pyrochlore-type solid electrolyte is 100 g, the supplied halogen amount is 10 g, and the halogen supply time is 5 hours (5 × 60 minutes), then the halogen supply rate Vin is calculated as Vin = (10/100)/(5 × 60) × 106 = 333 ppm/min. Additionally, when halogen is supplied in excess by 30 wt% relative to the theoretical halogen amount, and the halogen supply time is 5 hours (5 × 60 minutes), the halogen supply rate Vin is calculated as Vin = (30/100)/(5 × 60) × 106=1000 ppm/min.

The halogen volatilization rate Vout is the amount of halogen volatilized from the pyrochlore-type solid electrolyte per unit time, with units of ppm/min. More specifically, the halogen volatilization rate Vout is the ratio of the amount of halogen volatilized per unit time to the theoretical halogen amount of the pyrochlore-type solid electrolyte.

The theoretical halogen amount, which is the theoretical quantity of halogen component contained in LLNOF, is 4.87 wt%. For example, when LLNOF is fired under predetermined firing conditions for 7 hours and the amount of halogen volatilized is 0.5 wt%, the halogen volatilization rate Vout for LLNOF is calculated as Vout = (0.5/4.87)/(7 × 60) × 106 = 244 ppm/min. The amount of halogen volatilized can be calculated, for example, from the weight loss when firing with a halogen supply rate Vin = 0, and from the halogen weight ratio in the fired product as measured by an energy-dispersive X-ray fluorescence analyzer EDX.

Specifically, the amount of halogen volatilized can be calculated by measuring the elemental weight ratio using an energy-dispersive X-ray fluorescence analyzer EDX, multiplying the halogen weight ratio by the weight loss after firing, and dividing the result by the firing time. It should be noted that when elements such as Li or O are included as constituent elements of the solid electrolyte, they cannot be detected with high accuracy by an energy-dispersive X-ray fluorescence analyzer EDX. Therefore, among the quantitatively detected elements, the element with the highest melting point is assumed not to volatilize, and the halogen weight ratio relative to that element is used to calculate the halogen weight ratio in the solid electrolyte after firing.

In pyrochlore-type solid electrolytes, as the particle diameter Dp increases, the specific surface area decreases, resulting in a smaller amount of halogen volatilization. On the other hand, the required diffusion distance for the halogen supplied to compensate for the halogen volatilized from inside the solid electrolyte becomes longer. Therefore, in the present embodiment, the halogen supply rate Vin is increased with an increase in the particle diameter Dp of the pyrochlore-type solid electrolyte, and the halogen supply rate Vin is also increased with an increase in the halogen volatilization rate Vout.

Specifically, the relationship between the halogen supply rate Vin, the halogen volatilization rate Vout, and the particle diameter Dp of the pyrochlore-type solid electrolyte is controlled such that Vin/(Vout × Dp) ≥ 0.015 is satisfied. In cases where Vin/(Vout × Dp) < 0.015, the halogen supply is insufficient relative to halogen volatilization, making it impossible to maintain the predetermined amount of halogen within the pyrochlore-type solid electrolyte. In order to sufficiently supply halogen to compensate for halogen volatilization from the pyrochlore-type solid electrolyte, it is desirable that Vin/(Vout × Dp) ≥ 0.05, more preferably Vin/(Vout × Dp) ≥ 0.07, and even more preferably Vin/(Vout × Dp) ≥ 0.10.

If the halogen supply rate Vin becomes excessively high, the halogen in the firing atmosphere will be in an excessive state, which may react with residual moisture in the raw materials or the firing atmosphere gas and cause excessive generation of hydrogen halides such as hydrogen fluoride or hydrogen chloride, potentially resulting in damage to the firing furnace 200 or the like. Therefore, it is desirable that Vin/(Vout × Dp) ≤ 100, and even more desirable that Vin/(Vout × Dp) ≤ 50.

In addition, in order to suppress halogen dissociation from the pyrochlore-type solid electrolyte, it is desirable to seal the pyrochlore-type solid electrolyte using a chemically stable substance with respect to the pyrochlore-type solid electrolyte. By sealing the pyrochlore-type solid electrolyte, the halogen components volatilized from the pyrochlore-type solid electrolyte remain within the sealed atmosphere and reach a saturated state. As a result, the apparent volatilization of halogen components is suppressed, and the halogen volatilization rate Vout can be reduced.

For example, by firing the raw materials of the pyrochlore-type solid electrolyte while they are contained in a vessel made of a material that is chemically stable with respect to the pyrochlore-type solid electrolyte, the pyrochlore-type solid electrolyte can be sealed. Platinum, copper, and Al₂O₃ are materials that are chemically stable with respect to the pyrochlore-type solid electrolyte, and the firing of the raw materials for the pyrochlore-type solid electrolyte can be performed using a vessel made of at least one of platinum, copper, and Al₂O₃. As such a vessel, a crucible made of at least one of platinum, copper, and Al₂O₃, or a metal foil vessel made of at least one of platinum foil and copper foil can be used. The crucible made of at least one of platinum, copper, or Al₂O₃ and the metal foil vessel made of at least one of platinum foil and copper foil may be used individually or in combination. Here, the sealed state does not necessarily have to be completely airtight and may be adjusted as appropriate, as long as halogen volatilization is suppressed.

When using a crucible, making the structure as dense as possible can suppress the outflow of halogen through pores and increase the degree of sealing. Furthermore, by minimizing irregularities on a contact surface between a lid and a main body of the crucible, the outflow of halogen between the lid and the main body can be suppressed, thereby increasing the degree of sealing.

By using the metal foil and crucible together, the effect of sealing the pyrochlore-type solid electrolyte can be enhanced.

In addition, when the mixed raw materials for the pyrochlore-type solid electrolyte contain a large amount of moisture, hydrogen atoms in the moisture react with halogen atoms, thereby promoting halogen volatilization from the pyrochlore-type solid electrolyte. Therefore, in order to suppress halogen dissociation from the pyrochlore-type solid electrolyte, it is desirable to reduce the moisture content of the mixed raw materials for the pyrochlore-type solid electrolyte. For example, by subjecting the mixed raw materials for the pyrochlore-type solid electrolyte to a drying treatment beforehand, raw materials with a low moisture content can be obtained. It is desirable that the raw materials for the pyrochlore-type solid electrolyte have a moisture content of 2500 ppm or less as measured by the Karl Fischer method. It should be noted that the moisture content of the mixed raw materials for the pyrochlore-type solid electrolyte, as referred to in the present disclosure, is the value measured immediately before supplying halogen to the firing atmosphere in the third firing process S17.

In addition, it is desirable to set the firing temperature in the firing process for the pyrochlore-type solid electrolyte as low as possible within a range that does not hinder the synthesis of the pyrochlore-type solid electrolyte. By lowering the firing temperature in the firing process, volatilization of halogen components from the pyrochlore-type solid electrolyte can be suppressed.

It is also desirable that the particle diameter of the mixed raw materials for the pyrochlore-type solid electrolyte be within a predetermined range. Specifically, it is desirable that the particle diameter of the mixed raw materials for the pyrochlore-type solid electrolyte be in the range of 0.05 to 5 µm. The particle diameter of the mixed raw materials for the pyrochlore-type solid electrolyte refers to the particle median diameter D50, measured immediately before halogen is supplied to the firing atmosphere in the third firing process S17.

If the particle diameter of the mixed raw materials is too small, halogen tends to volatilize more easily from the particle surfaces. Therefore, in order to suppress the volatilization of halogen from the raw material particles, it is desirable that the particle diameter of the mixed raw materials be at least 0.05 µm. On the other hand, if the particle diameter of the mixed raw materials is too large, although the amount of halogen volatilization decreases, the specific surface area becomes smaller, making it difficult for the synthesis reaction of the pyrochlore-type solid electrolyte to proceed. Therefore, if the particle diameter of the mixed raw materials is too large, it becomes necessary to increase the firing temperature, which in turn promotes halogen volatilization. Therefore, in order to facilitate the synthesis reaction of the pyrochlore-type solid electrolyte, it is desirable that the particle diameter of the mixed raw materials be 5 µm or less.

Next, a manufacturing method of the pyrochlore-type solid electrolyte according to the present embodiment will be explained with reference to FIG. 6. FIG. 6 shows a process flow for manufacturing LLNOF (Li_{1.25}La_{0.58}Nb₂O₆F).

In the present embodiment, in the third firing process S17, the halogen component is supplied to the firing atmosphere of the pyrochlore-type solid electrolyte. It should be noted that, although FIG. 6 shows an example of the manufacturing method in which a halogen source is added in a second raw material preparation process S15, it is also possible to add the halogen source in a first raw material preparation process S10 and omit at least a part of the processes from a first mixing process S11 to the second raw material preparation process S15.

First, the first raw material preparation process S10 is carried out, in which a lanthanum source, a lithium source, and a niobium source are prepared as raw materials for LLNOF. As the lanthanum source, the lithium source, and the niobium source, metal oxides, metal carbonates, or the like can be used. In the present embodiment, La₂O₃ is used as the lanthanum source, Li₂CO₃ is used as the lithium source, and Nb₂O₅ is used as the niobium source. It should be noted that, in the case of manufacturing LLTOF (Li_{1.25}La_{0.58}Ta₂O₆F), a tantalum source (for example, Ta₂O₅) may be used instead of the niobium source.

Next, the first mixing process S11 is carried out in which La₂O₃, Li₂CO₃, and Nb₂O₅ are weighed, mixed in a predetermined ratio, and pulverized to produce a mixture.

Next, a first firing process S12 is carried out in which the mixture of raw materials is fired. In the first firing process, a preliminary firing is performed by heating the mixture at 500°C for 6 hours in air. By the preliminary firing, moisture and the like are removed from the mixture, and a reactivity can be increased. In addition, by removing moisture from the mixture, it is possible to suppress the generation of hydrogen fluoride in the third firing process S17, which will be described later.

Next, after carrying out a second mixing process S13 in which the fired mixture is mixed and pulverized, a second firing process S14 is performed to fire the mixture. In the second firing process, a main firing is performed by heating the mixture at 1200°C for 4 hours in air. Through the second firing process S₁₄, Li_{0.5}La_{0.5}Nb₂O₆, which is a precursor of the target pyrochlore-type solid electrolyte, is obtained.

Next, a second raw material preparation process S15 is performed, in which a halogen source is prepared as a raw material for the pyrochlore-type solid electrolyte. The halogen source is a halogen-containing raw material that contains a halogen element. As the halogen source, for example, a metal fluoride can be used. In the present embodiment, LiF and LaF₃ are used as halogen sources. LiF serves as both a halogen source and a lithium source, while LaF₃ serves as both a halogen source and a lanthanum source. When manufacturing LLNOCl, LiCl and LaCl₃ may be used as halogen sources, for example.

Next, a third mixing process S16 is performed, in which the pyrochlore-type solid electrolyte precursor, LiF, and LaF₃ are weighed, mixed together at a predetermined ratio, and pulverized to prepare a mixture of the precursor and the halogen sources. If the halogen sources are added during the first raw material preparation process S10 and at least a part of processes from the first mixing process S11 to the second raw material preparation process S15 is omitted, then in the third mixing process S16, it is sufficient to prepare a mixture of the raw materials for the pyrochlore-type solid electrolyte precursor and the halogen sources. It should be noted that the third mixing process S16 corresponds to a mixing process of the present disclosure, and a mixture of the precursor or the raw materials of the precursor and the halogen sources corresponds to a mixed raw material of the present disclosure.

Next, the third firing process S17 is performed, in which the mixture of the precursor and the halogen sources is heated and fired at a predetermined temperature. In the third firing process S17, the mixture of the precursor and the halogen sources is placed in the firing furnace 200 and fired by heating at 1000°C for 6 hours under a nitrogen atmosphere. To create the nitrogen atmosphere inside the firing furnace 200, for example, nitrogen gas is supplied to the firing furnace 200 at a rate of 5 L/min. Through the third firing process S17, the target substance, pyrochlore-type solid electrolyte LLNOF, is obtained. The third firing process S17 corresponds to a firing process in the present disclosure.

In the third firing process S17, the halogen component volatilizes from the pyrochlore-type solid electrolyte due to heating. Therefore, in the present embodiment, during the third firing process S17, the halogen component is supplied to the firing atmosphere of the pyrochlore-type solid electrolyte inside the firing furnace 200, increasing the concentration of halogen gas in the firing atmosphere and thereby suppressing the volatilization of halogen from the pyrochlore-type solid electrolyte.

The supply of halogen in the third firing process S17 can be achieved, for example, by adding an excess amount of LiF to the raw materials in the third mixing process S16, beyond the stoichiometric amount required for the synthesis of the target compound LLNOF. In other words, in the third mixing process S16, it is sufficient to add LiF to the mixture of the precursor and the halogen sources in an amount exceeding the stoichiometric ratio (mole ratio) relative to the target compound LLNOF. The stoichiometric ratio is the ratio of the number of moles of LiF, which is the reactant, to the number of moles of LLNOF, which is the target compound. The stoichiometric ratio relative to the target compound LLNOF can also be referred to as the theoretical amount or chemical equivalent.

By adding an excess amount of LiF to the raw materials in which the precursor and halogen sources are mixed, a portion of the halogen component volatilizes, thereby enabling the supply of halogen to the firing atmosphere.

The supply of halogen in the third firing process S17 can also be performed by supplying a halogen-containing gas such as F₂ to the firing furnace 200.

The supply of halogen in the third firing process S17 is carried out so that the relationship between the halogen supply rate Vin, the halogen volatilization rate Vout, and the particle diameter Dp of the pyrochlore-type solid electrolyte satisfies Vin/(Vout × Dp) ≥ 0.015.

Next, if necessary, a micronizing process S18 is performed to micronize the produced pyrochlore-type solid electrolyte, thereby enabling the manufacture of the pyrochlore-type solid electrolyte represented by the composition formula "Li_{1.25}La_{0.58}Nb₂O₆F". The manufactured pyrochlore-type solid electrolyte is particulate and can be used as a constituent material for the solid electrolyte 15. By laminating the solid electrolyte 15 using the pyrochlore-type solid electrolyte, the positive electrode 14, and the negative electrode 12, the secondary battery 10 can be manufactured. The particle diameter Dp of the pyrochlore-type solid electrolyte in the present disclosure refers to the particle diameter before the micronizing process S18.

In addition, by changing the mixing ratios of La₂O₃ and Nb₂O₅, as well as the mixing ratio of LiF in the above manufacturing process, it is possible to obtain a pyrochlore-structured crystal represented by the composition formula "Li_{2-α}La_{(1+α)/3}Nb₂O_{7-β}F_{γ}". By changing the mixing ratios of La₂O₃ and Nb₂O₅, as well as the mixing ratio of LiF, the values of α, β, and γ in the composition formula can be adjusted. When firing is performed, a part of the materials is sublimated. Therefore, by changing the firing conditions, furnace atmosphere, and furnace size in the first firing process S12, the second firing process S14, and the third firing process S17, it is also possible to adjust α, β, and γ.

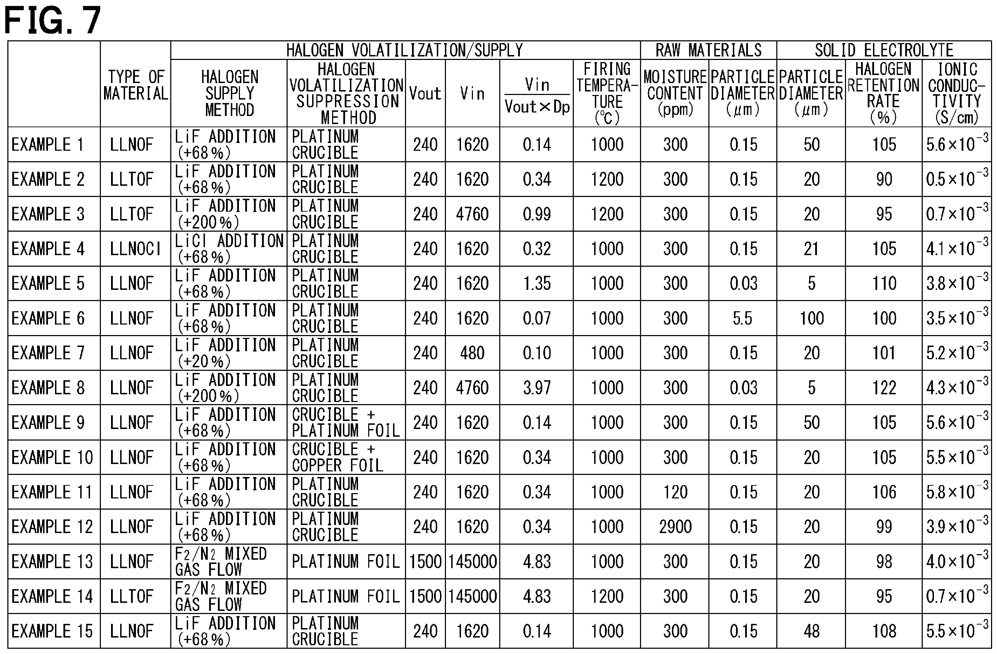

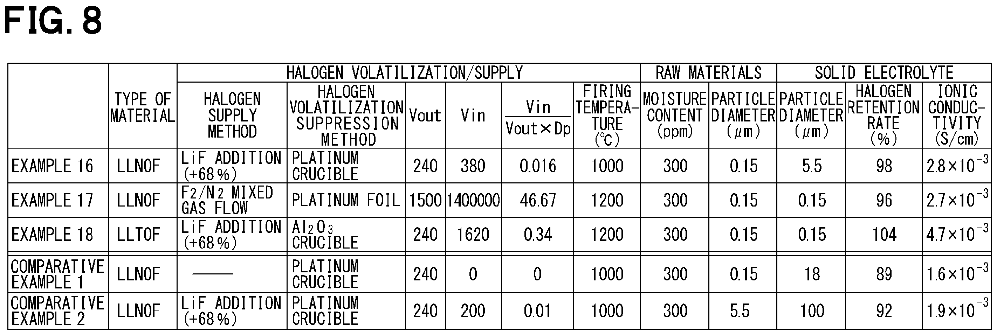

Next, Examples of the present disclosure and Comparative Examples will be described with reference to FIG. 7 and FIG. 8. The raw materials used in Examples and Comparative Examples were mixed raw materials in which the precursor of the pyrochlore-type solid electrolyte and the halogen sources were mixed in the third mixing process S16. Physical properties of Examples and Comparative Examples were measured using the following methods.

### [Moisture Content of Mixed Raw Materials]

The moisture content of the mixed raw materials before the firing process was measured by applying a Karl Fischer coulometric titration method, using an ADP-611 (Kyoto Electronics Manufacturing Co., Ltd.) as a moisture vaporizer and an MKC-610 as a moisture meter.

### [Particle Diameter of Mixed Raw Materials]

The particle diameter of the mixed raw materials before the firing process was determined by dispersing the mixed raw materials in ethanol and measuring the volume-average particle diameter distribution using a laser diffraction/scattering particle diameter distribution analyzer Partica LA-960, manufactured by HORIBA, Ltd. The particle diameter of the mixed raw materials is defined as the median particle diameter D50, which refers to the particle diameter, on a volume basis, at which the integrated volume of particles, accumulated from the smaller particle diameters in the particle diameter distribution, reaches 50% of the total particle volume.

### [Particle Diameter Dp of Solid Electrolyte]

The particle diameter Dp of the solid electrolyte was determined by dispersing the solid electrolyte before the micronizing process in ethanol and measuring the volume-average particle diameter distribution using a laser diffraction/scattering particle diameter distribution analyzer Partica LA-960, manufactured by HORIBA, Ltd. The particle diameter Dp of the solid electrolyte is defined as the median particle diameter D50, which refers to the particle diameter, on a volume basis, at which the integrated volume of particles, accumulated from the smaller particle diameters in the particle diameter distribution, reaches 50% of the total particle volume.

### [Halogen Retention Rate]

The halogen retention rate of the solid electrolyte refers to the ratio of the amount of halogen present in the solid electrolyte after the firing process to the theoretical halogen amount in the solid electrolyte. The halogen content in the solid electrolyte after the firing process was measured using an energy-dispersive X-ray fluorescence analyzer EDX, specifically EDX-8100 manufactured by Shimadzu Corporation, to determine the weight percentage of elements. In cases where the solid electrolyte contains elements such as Li or O as constituent elements, these cannot be accurately detected. Therefore, among the quantitatively detected elements, the element with the highest melting point is assumed not to volatilize, and the halogen content in the solid electrolyte after firing is determined based on the weight ratio of halogen to this element. The halogen retention rate is then defined as the ratio of this value to the theoretical halogen amount.

### [Ionic Conductivity]

The ionic conductivity of the solid electrolyte was measured by an alternating current impedance method. In the impedance measurement, an alternating current signal was applied to the solid electrolyte at multiple frequencies, and an alternating current impedance was measured at each frequency. By plotting the measured impedance on the complex plane, a complex impedance plot including an arc trajectory was obtained. The resistance value of the measurement sample was obtained from the intersection of the horizontal axis and the extrapolated line of multiple measurement points showing an arcuate decrease in impedance, and the ionic conductivity was calculated by multiplying the reciprocal of this resistance value by the thickness (cm) / the electrode area (cm²) of the measurement sample.

In all of Examples 1 to 18, the relationship among the halogen supply rate Vin, the halogen volatilization rate Vout, and the particle diameter Dp of the pyrochlore-type solid electrolyte satisfies Vin/(Vout × Dp) ≥ 0.015, and furthermore, Vin/(Vout × Dp) ≤ 50. In contrast, in Comparative Example 1 and Comparative Example 2, Vin/(Vout × Dp) < 0.015.

In Examples 1, 5 to 13, and 15 to 18, as well as Comparative Examples 1 and 2, LLNOF (Li_{1.25}La_{0.58}Nb₂O₆F) was produced using Li₂CO₃, La₂O₃, Nb₂O₅, LiF, and LaF₃ as raw materials. In Examples 2, 3, and 14, LLTOF (Li_{1.25}La_{0.58}Ta₂O₆F) was produced using Li₂CO₃, La₂O₃, Ta₂O₅, LiF, and LaF₃ as raw materials. In Example 4, LLNOCl (Li_{1.25}La_{0.58}Nb₂O₆Cl) was produced using Li₂CO₃, La₂O₃, Nb₂O₅, LiCl, and LaCl₃ as raw materials.

In Examples 1 to 12, 15, 16, and 18, as well as Comparative Example 2, halogen was supplied to the firing atmosphere by adding an excess amount of LiF relative to the theoretical amount among the raw materials. In Examples 1, 2, 5, 6, 9 to 12, 15, 16, 18, and Comparative Example 2, LiF was added in an amount of 68% in excess of the theoretical amount. In Examples 3 and 8, LiF was added in an amount of 200% in excess of the theoretical amount. In Example 7, LiF was added in an amount of 20% in excess of the theoretical amount. In Example 4, LiCl was added in an amount of 68% in excess of the theoretical amount.

In Examples 13, 14, and 17, halogen was supplied to the firing atmosphere by introducing F2, which is a halogen-containing gas, into the firing furnace 200. In Comparative Example 1, no halogen was supplied to the firing atmosphere.

In Examples 1 to 14, 16 to 18, and Comparative Example 2, the above processes S10 to S17 were carried out, and halogen was supplied to the firing atmosphere in the third firing process S17. In Example 15, processes S12 to S15 among the above processes S10 to S17 were omitted, 68% excess LiF relative to the theoretical amount was added in the first raw material preparation process S10, and halogen was supplied to the firing atmosphere in the third firing process S17.

In Examples 1 to 8, 11, 12, 15, 16, and Comparative Examples 1 and 2, the mixed raw materials were placed in a platinum crucible to suppress halogen volatilization. In Example 9, the mixed raw materials were sealed in a platinum foil container and then placed in an Al₂O₃ crucible to suppress halogen volatilization. In Example 10, the mixed raw materials were sealed in a copper foil container and then placed in an Al₂O₃ crucible to suppress halogen volatilization. In Examples 13 and 14, the mixed raw materials were sealed in a platinum foil container and halogen volatilization was suppressed without placing them in a crucible. In Example 18, the mixed raw materials were placed in an Al₂O₃ crucible to suppress halogen volatilization.

The halogen volatilization rate Vout in Examples 1 to 12, 15, 16, 18, and Comparative Examples 1 and 2 was 240 ppm/min. The halogen volatilization rate Vout in Examples 13, 14, and 17 was 1500 ppm/min.

The halogen supply rate Vin in Examples 1, 2, 4 to 6, 9 to 12, 15, and 18 was 1620 ppm/min. The halogen supply rate Vin in Examples 3 and 8 was 4760 ppm/min. The halogen supply rate Vin in Example 7 was 480 ppm/min. The halogen supply rate Vin in Examples 13 and 14 was 145,000 ppm/min. The halogen supply rate Vin in Example 16 was 380 ppm/min. The halogen supply rate Vin in Example 17 was 1,400,000 ppm/min. The halogen supply rate Vin in Comparative Example 2 was 200 ppm/min.

The firing temperature in the third firing process S17 of Examples 1, 4 to 13, 15 to 18, and Comparative Examples 1 and 2 was 1000°C. The firing temperature in the third firing process S17 of Examples 2, 3, and 14 was 1200°C.

In Examples 1 to 10, 13 to 18, and Comparative Examples 1 and 2, the moisture content of the mixed raw materials was 300 ppm. In Example 12, the moisture content of the raw materials was 120 ppm. In Example 13, the moisture content of the raw materials was 2900 ppm.

In Examples 1 to 4, 7, 9 to 15, 17, 18, and Comparative Example 1, the particle diameter of the raw material particles was 0.15 µm. In Examples 5 and 8, the particle diameter of the raw material particles was 0.03 µm. In Examples 6, 16, and Comparative Example 2, the particle diameter of the raw materials was 5.5 µm.

The ionic conductivity of the pyrochlore-type solid electrolytes obtained in Examples 1, 4 to 13, and 15 to 18 was in the range of 2.7 × 10⁻³ S/cm to 5.8 × 10⁻³ S/cm. The ionic conductivity of the pyrochlore-type solid electrolytes obtained in Comparative Examples 1 and 2 was in the range of 1.6 × 10⁻³ S/cm to 1.9 × 10⁻³ S/cm. In other words, all of Examples 1, 4 to 13, and 15 to 18 exhibited higher ionic conductivity than Comparative Examples 1 and 2.

The ionic conductivity of the pyrochlore-type solid electrolytes obtained in Examples 2, 3, and 14 was in the range of 0.5 × 10⁻³ S/cm to 0.7 × 10⁻³ S/cm. In Examples 2, 3, and 14, Ta was used as a constituent element of the solid electrolyte, resulting in slightly lower ionic conductivity compared to the case where Nb was used.

In Example 12, the moisture content of the raw materials was higher than 2500 ppm. Therefore, it is considered that the H element in the moisture combined with fluorine to generate HF, thereby promoting halogen volatilization. As a result, the halogen retention rate of the pyrochlore-type solid electrolyte was slightly lower at 99%, and the ionic conductivity was also slightly lower at 3.9 × 10⁻³ S/cm.

In Example 5, since the particle diameter of the raw materials was smaller than 0.05 µm, it is considered that halogen volatilization from the particle surfaces was facilitated. Therefore, the halogen retention rate of the pyrochlore-type solid electrolyte was slightly lower at 99%, and the ionic conductivity was also slightly lower at 3.8 × 10⁻³ S/cm.

In Examples 6 and 16, since the particle diameter of the raw materials was larger than 5 µm, the reaction surface area was reduced. Therefore, it is considered that the synthesis reaction of the pyrochlore-type solid electrolyte was less likely to proceed, and that trace impurities were present in the product due to incomplete reaction. The ionic conductivity was slightly lower, at 3.5 × 10⁻³ S/cm for Example 6 and 2.8 × 10⁻³ S/cm for Example 16.

According to the present embodiment described above, in the firing process S17, the relationship between the halogen supply rate Vin, the halogen volatilization rate Vout, and Dp is set to Vin/(Vout × Dp) ≥ 0.015, and further, Vin/(Vout × Dp) ≤ 50. In the firing process S17, the mixture of the precursor of the pyrochlore-type solid electrolyte and the halogen sources is fired to synthesize the pyrochlore-type solid electrolyte. As a result, in the third firing process S17, halogen dissociation from the pyrochlore-type solid electrolyte can be suppressed, thereby preventing a decrease in ionic conductivity.

In addition, by increasing the halogen supply rate Vin so that Vin/(Vout × Dp) ≥ 0.05, halogen dissociation from the pyrochlore-type solid electrolyte in the third firing process S17 can be effectively suppressed, and the decrease in ionic conductivity can be effectively prevented. Furthermore, by further increasing the halogen supply rate Vin so that Vin/(Vout × Dp) ≥ 0.10, halogen dissociation from the pyrochlore-type solid electrolyte in the third firing process S17 can be even more effectively suppressed, and the decrease in ionic conductivity can be even more effectively prevented.

Moreover, according to the present embodiment, by adding the halogen-containing compound to the raw materials of the pyrochlore-type solid electrolyte, halogen can be supplied to the firing atmosphere of the pyrochlore-type solid electrolyte. When the halogen-containing compound is a halide of the alkali metal cation constituting the pyrochlore-type solid electrolyte, halogen can be supplied to the firing atmosphere from the excess halogen source by adding an amount of the halogen source in excess of the stoichiometric amount.

Moreover, according to the present embodiment, by circulating the halogen-containing gas through the firing furnace 200, halogen can be supplied to the firing atmosphere of the pyrochlore-type solid electrolyte.

Moreover, according to the present embodiment, in the third firing process S17, by firing the raw materials of the pyrochlore-type solid electrolyte while wrapped in metal foil, the raw materials can be sealed, and volatilization of halogen from the raw materials can be suppressed. Similarly, in the third firing process S17, by firing the raw materials of the pyrochlore-type solid electrolyte while placed in a crucible, volatilization of halogen from the raw materials can be suppressed.

Moreover, according to the present embodiment, the particle diameter of the raw materials for the pyrochlore-type solid electrolyte is set within the range of 0.05 to 5 µm. As a result, volatilization of halogen caused by the particle diameter of the raw materials being too small can be suppressed, and insufficient reaction of the pyrochlore-type solid electrolyte caused by the particle diameter of the raw materials being too large can also be suppressed.

Moreover, according to the present embodiment, by setting the moisture content of the raw materials for the pyrochlore-type solid electrolyte to 2500 ppm or less, volatilization of halogen can be further suppressed. As a result, it is possible to suppress the reaction between halogen atoms contained in the pyrochlore-type solid electrolyte and hydrogen atoms in moisture, thereby suppressing the volatilization of halogen from the pyrochlore-type solid electrolyte.

The present disclosure is not limited to the embodiments described above, and can be variously modified as follows without departing from the gist of the present disclosure. The means disclosed in the above-described embodiments may be appropriately combined to the extent practicable.

In the above embodiments, the application of the active material composite particles of the present disclosure to lithium-ion batteries, where the conductive ions are lithium ions, has been described, but they may also be applied to secondary batteries with different conductive ions. Specifically, the active material composite particles of the present disclosure can be applied to potassium-ion batteries where potassium ions conduct, or sodium-ion batteries where sodium ions conduct, among others.

The features of the manufacturing method of the solid electrolyte disclosed in the present specification are described below.

### (First Feature)

A manufacturing method of a solid electrolyte having a pyrochlore-type crystal structure that includes a plurality of cations including a metal cation, a halogen element, and a defect structure, includes a mixing process (S16) that includes preparing a mixed raw material by mixing a precursor of the solid electrolyte or raw materials of the precursor with a halogen-containing raw material containing the halogen element, and a firing process (S17) that includes firing the mixed raw material. The firing process includes volatilizing the halogen element from the solid electrolyte at a halogen volatilization rate Vout and supplying the halogen element to a firing atmosphere of the solid electrolyte at a halogen supply rate Vin. The firing process includes firing the mixed raw material under an atmosphere where a relationship of Vin/(Vout × Dp) ≥ 0.015 is satisfied, where Dp is a median particle diameter of the solid electrolyte.

### (Second Feature)

In the manufacturing method of the solid electrolyte according to the first feature, the firing process includes supplying the halogen element to the firing atmosphere of the solid electrolyte by performing at least one of supplying a halogen-containing gas that contains the halogen element to the mixed raw material, and adding a halogen-containing compound that includes the halogen element to the mixed raw material.

### (Third Feature)

In the manufacturing method of the solid electrolyte according to the second feature, the halogen element is F, and the halogen-containing compound contains at least one fluoride of the metal cation.

### (Fourth Feature)

In the manufacturing method of the solid electrolyte according to the second feature, the halogen element is F, and the halogen-containing gas is at least one selected from a group consisting of F₂, HF, BF₃, NF₃, PF₅, SiF₄, and SF₆.

### (Fifth Feature)

In the manufacturing method of the solid electrolyte according to any one of the first to fourth features, the firing process includes firing the mixed raw material in a container made of a chemically stable material with respect to the solid electrolyte having the pyrochlore-type crystal structure.

### (Sixth Feature)

In the manufacturing method of the solid electrolyte according to any one of the first to fifth features, a water content of the mixed raw material, as measured by the Karl Fischer method, is 2500 ppm or less.

### (Seventh Feature)

In the manufacturing method of the solid electrolyte according to any one of the first to sixth features, a particle diameter of the mixed raw material is in a range of 0.05 to 5 µm.

### (Eighth Feature)

In the manufacturing method of the solid electrolyte according to any one of the first to seventh features, the solid electrolyte has a composition formula of Aa_{2-α}Ab_{(1+α)/3}B₂O_{7-β}X_{γ}, where Aa is an alkali metal, Ab includes at least a lanthanoid, B is a cation different from Aa and Ab, X is an anion capable of substituting for O atoms constituting the solid electrolyte, and in the composition formula, α is in a range of 0.6 < α < 2.0, β is in a range of 0 < β ≤1, γ is in a range of 0 < γ ≤1, and the solid electrolyte has the defect structure.

### (Ninth Feature)

In the manufacturing method of the solid electrolyte according to any one of the first to eighth features, the firing process includes firing the mixed raw material under an atmosphere in which a relationship of Vin/(Vout × Dp) ≥ 0.05 is satisfied.

### (Tenth Feature)

In the manufacturing method of the solid electrolyte according to any one of the first to ninth features, the firing process includes firing the mixed raw material under an atmosphere in which a relationship of Vin/(Vout × Dp) ≥ 0.10 is satisfied.

### (Eleventh Feature)

In the manufacturing method of the solid electrolyte according to any one of the first to tenth features, the firing process includes firing the mixed raw material under an atmosphere in which a relationship of Vin/(Vout × Dp) ≤ 50 is satisfied.

### (Twelfth Feature)

In the manufacturing method of the solid electrolyte according to the fifth feature, the container is made of at least one material selected from a group consisting of platinum, copper, and Al₂O₃.

### (Thirteenth Feature)

In the manufacturing method of the solid electrolyte according to the twelfth feature, the container is a crucible made of at least one material selected from the group consisting of platinum, copper, and Al₂O₃, or a container made of a metal foil selected from at least one of a platinum foil and a copper foil.

### (Fourteenth Feature)

A manufacturing method of a secondary battery includes laminating the solid electrolyte (15) manufactured by the manufacturing method according to any one of the first to thirteenth features, a positive electrode (14), and a negative electrode (12).

Although the present disclosure has been described according to the embodiments, it is understood that the present disclosure is not limited to the above-described embodiments or structures. To the contrary, the present disclosure is intended to cover various modifications and equivalent arrangements. In addition, while the various elements are shown in various combinations and configurations, which are exemplary, other combinations and configurations, including more, less or only a single element, are also within the spirit and scope of the present disclosure.

## Claims

1. A manufacturing method of a solid electrolyte having a pyrochlore-type crystal structure that includes a plurality of cations including a metal cation, a halogen element, and a defect structure, the manufacturing method comprising:
a mixing process (S16) that includes preparing a mixed raw material by mixing a precursor of the solid electrolyte or raw materials of the precursor with a halogen-containing raw material containing the halogen element; and
a firing process (S17) that includes firing the mixed raw material, wherein
the firing process includes volatilizing the halogen element from the solid electrolyte at a halogen volatilization rate Vout and supplying the halogen element to a firing atmosphere of the solid electrolyte at a halogen supply rate Vin, and
the firing process includes firing the mixed raw material under an atmosphere where a relationship of Vin/(Vout × Dp) ≥ 0.015 is satisfied, where Dp is a median particle diameter of the solid electrolyte.

2. The manufacturing method of the solid electrolyte according to claim 1, wherein the firing process includes supplying the halogen element to the firing atmosphere of the solid electrolyte by performing at least one of supplying a halogen-containing gas that contains the halogen element to the mixed raw material, and adding a halogen-containing compound that includes the halogen element to the mixed raw material.

3. The manufacturing method of the solid electrolyte according to claim 2, wherein the halogen element is F, and the halogen-containing compound contains at least one fluoride of the metal cation.

4. The manufacturing method of the solid electrolyte according to claim 2, wherein the halogen element is F, and the halogen-containing gas is at least one selected from a group consisting of F₂, HF, BF₃, NF₃, PF₅, SiF₄, and SF₆.

5. The manufacturing method of the solid electrolyte according to claim 1, wherein the firing process includes firing the mixed raw material in a container made of a chemically stable material with respect to the solid electrolyte having the pyrochlore-type crystal structure.

6. The manufacturing method of the solid electrolyte according to claim 1, wherein a water content of the mixed raw material, as measured by the Karl Fischer method, is 2500 ppm or less.

7. The manufacturing method of the solid electrolyte according to claim 1, wherein a particle diameter of the mixed raw material is in a range of 0.05 to 5 µm.

8. The manufacturing method of the solid electrolyte according to claim 1, wherein the solid electrolyte has a composition formula of Aa_{2-α}Ab_{(1+α)/3}B₂O_{7-β}X_{γ}, where Aa is an alkali metal, Ab includes at least a lanthanoid, B is a cation different from Aa and Ab, X is an anion capable of substituting for O atoms constituting the solid electrolyte, and in the composition formula, α is in a range of 0.6 < α < 2.0, β is in a range of 0 < β ≤1, γ is in a range of 0 < γ ≤1, and the solid electrolyte has the defect structure.

9. The manufacturing method of the solid electrolyte according to claim 1, wherein the firing process includes firing the mixed raw material under an atmosphere in which a relationship of Vin/(Vout × Dp) ≥ 0.05 is satisfied.

10. The manufacturing method of the solid electrolyte according to claim 1, wherein the firing process includes firing the mixed raw material under an atmosphere in which a relationship of Vin/(Vout × Dp) ≥ 0.10 is satisfied.

11. The manufacturing method of the solid electrolyte according to claim 1, wherein the firing process includes firing the mixed raw material under an atmosphere in which a relationship of Vin/(Vout × Dp) ≤ 50 is satisfied.

12. The manufacturing method of the solid electrolyte according to claim 5, wherein the container is made of at least one material selected from a group consisting of platinum, copper, and Al₂O₃.

13. The manufacturing method of the solid electrolyte according to claim 12, wherein the container is a crucible made of at least one material selected from the group consisting of platinum, copper, and Al₂O₃, or a container made of a metal foil selected from at least one of a platinum foil and a copper foil.

14. A manufacturing method of a secondary battery, comprising:
laminating the solid electrolyte (15) manufactured by the manufacturing method according to any one of claims 1 to 13, a positive electrode (14), and a negative electrode (12).
